# EUROPEAN PATENT APPLICATION

(11) **EP 4 822 462 A1**
(43) Date of publication of application: **14.10.2026**
(21) Application number: 26171726.8
(22) Date of filing: 10.04.2026
(51) Int. Cl.: G05B 19/042, H04L 12/40

(54) **SOFTWARELESS INTEGRATED SYSTEMS**

(30) Priority: 11.04.2025 US 202563787194 P; 31.03.2026 US 202619634276
(71) Applicant: Magna International Inc., Aurora, ON L4G 7K1 (CA)
(72) Inventor: SMID, Gert Edzko, Aurora, ON L4G 7K1 (CA); WINTER, Martin, Aurora, ON L4G 7K1 (CA); SCHLAGER, Gerd, Aurora, ON L4G 7K1 (CA)
(74) Representative: Witte, Weller & Partner Patentanwälte mbB

(57) **Abstract**

A softwareless assembly includes: a plurality of electronic components including one or more input devices and one or more output devices; a shared communications interface configured to communicate status data from the one or more input devices to an external consumer located outside of the softwareless assembly, and to communicate control signals to the one or more output devices from an external command source located outside of the softwareless assembly; and a plurality of remote control interfaces each operably connected to one or more of the electronic components. The plurality of remote control interfaces are configured to transmit, between the shared communications interface and the one or more electronic components operably connected thereto, at least one of: the status data and/or the control signals. The plurality of remote control interfaces are each softwareless devices having no rewritable storage memory containing software instructions.

## Description

### CROSS REFERENCE TO RELATED APPLICATIONS

This utility patent application claims the benefit of U.S. Provisional Patent Application No. 63/787,194 filed April 11, 2025, the contents of which is incorporated herein by reference in its entirety.

### FIELD

The present disclosure relates generally to electrical and electronic control systems for vehicles, such as passenger cars or trucks.

### BACKGROUND

Microcontrollers and associated software present several challenges for electronic control systems, including costs and complexities for maintenance. Specialty fixed controllers, such as stepper-motor controller or blind-zone-radar-controller with a LIN or CAN interface can support specific functions without the need for a micro-controller or software. However, these specialty controllers are typically function-specific.

### SUMMARY

The present disclosure provides a softwareless assembly. The softwareless assembly comprises: a plurality of electronic components including one or more input devices and one or more output devices; a shared communications interface configured to communicate status data from the one or more input devices to an external consumer located outside of the softwareless assembly, and to communicate control signals to the one or more output devices from an external command source located outside of the softwareless assembly. The softwareless assembly also comprises a plurality of remote control interfaces each operably connected to one or more of the electronic components. The plurality of remote control interfaces are configured to transmit, between the shared communications interface and the one or more electronic components operably connected thereto, at least one of: the status data and/or the control signals. The plurality of remote control interfaces are each softwareless devices having no rewritable storage memory containing software instructions.

The present disclosure also provides a control system for a softwareless assembly. The control system comprises: a shared communications interface; a shared electronic control unit (ECU) operably connected to the shared communications interface; and a plurality of remote control interfaces. Each of the remote control interfaces is operably connected between the shared communications interface and one or more electronic components. Each remote control interface is configured to transmit, between the shared communications interface and the one or more electronic components operably connected thereto, at least one of: status data from one or more input devices and/or control signals to one or more output devices. The plurality of remote control interfaces are each softwareless devices having no rewritable storage memory containing software instructions.

These and other aspects of the present disclosure are disclosed in the following detailed description of the embodiments, the appended claims, and the accompanying figures.

### BRIEF DESCRIPTION OF THE DRAWINGS

Further details, features and advantages of designs of the invention result from the following description of embodiment examples in reference to the associated drawings.
FIG. 1 shows a top view of a vehicle with a schematic diagram showing various electrical devices, controllers, and wiring interconnections, and with four zones.
FIG. 2 shows a block diagram of a first fascia assembly for a vehicle, with a conventional electrical and electronics (E/E) configuration;
FIG. 3 shows a block diagram of a second fascia assembly for a vehicle, and with a softwareless E/E configuration, in accordance with an aspect of the present disclosure;
FIG. 4 shows a block diagram of a control software stack of several microcontrollers in the first fascia assembly of FIG. 2;
FIG. 5 shows a block diagram of a control software stack of a processor configured to control components in the second fascia assembly of FIG. 3, in accordance with an aspect of the present disclosure;
FIG. 6 shows a block diagram of a controller for a smart sensor or actuator in the first fascia assembly of FIG. 2;
FIG. 7 shows a block diagram of a first edge bus interface for a smart sensor or actuator in the second fascia assembly of FIG. 3, in accordance with an aspect of the present disclosure;
FIG. 8 shows a block diagram of the first edge bus interface of FIG. 7, with separate power and communications wires, in accordance with an aspect of the present disclosure; and
FIG. 9 shows a block diagram of a second edge bus interface, with a power-via-bus configuration, in accordance with an aspect of the present disclosure.

### DETAILED DESCRIPTION

Referring to the drawings, the present invention will be described in detail in view of following embodiments.

It is an objective of the systems and methods of the present disclosure to provide an integrated electrical and electronics (E/E) system or subsystem without microcontrollers and associated software. Instead, the E/E system or subsystem may include Ethernet-based Remote Control Interfaces in place of microcontrollers in conventional system or subsystem. Ethernet-based remote control interfaces can drive traditional peripheral interfaces of a microcontroller (such as SPI, I2C, UART, ...) directly from Ethernet messages, without the need for an actual microcontroller and software.

The present disclosure provides a softwareless subsystem, which refers to an assembled system with multiple electronic components, which does not contain any microcontrollers or programmable software. The electronic components in the subsystem are interconnected via a single communication interface - for example a single example Ethernet link. This same communication interface is used to connect the subsystem to a larger system.

Typical areas of application may include aerospace, industrial transport, automotive and robotic industries, with high content of electro-mechanical components. With a subsystem we may refer to a subassembly of a vehicle, such as a front assembly, or a door assembly, that can be manufactured and assembled independently, and then integrated to a larger system. Eliminating software and micro-controllers on this subsystem while minimizing the wiring (harness) complexity will reduce cost and eliminates software maintenance and reduce overall complexities of the vehicle architecture.

### Background

Although the principles of the present disclosure may apply to a variety of applications, the present disclosure provides an automotive vehicle as an example to illustrate and discuss the concept of softwareless subsystems.

Electrical and Electronics (E/E) Architectures for vehicles have become increasingly complex, with the growing number of Advanced Driver Assist Systems (ADAS) features, the growing number of convenience control functions and the growing number of data collection and sensor measurements that are included in modern vehicles.

Initially, each of these devices have been connected directly to dedicated Electronic Control Modules (ECU) that would control these devices and implement the logic for the behavior and the functions. Over time, multiple functions have been consolidated in Domain Controllers, which can operate on multiple devices simultaneously. To avoid having long cables to receive sensor information or drive actuators to and from these devices, these Domain Controllers are using communication signals such as Controller Area Networks (CAN) or Local Interconnect Network (LIN). For the devices to operate via these Networks, they would need to interpret the commands from the signals in the network and be able to return information via signals on the network. This means that each of the devices that is connected to these networks, needs to have a micro-controller with associated software to support the communication protocols and translate the signals to the functional peripheral actions of the device. These peripheral actions are typically implemented with localized signals like General Purpose Inputs or Outputs (GPIO), Pulse-Width Modulation (PWM), Serial Peripheral Interface (SPI), Inter-Integrated Circuit (I2C) or Universal Asynchronous Receiver/Transmitter (UART).

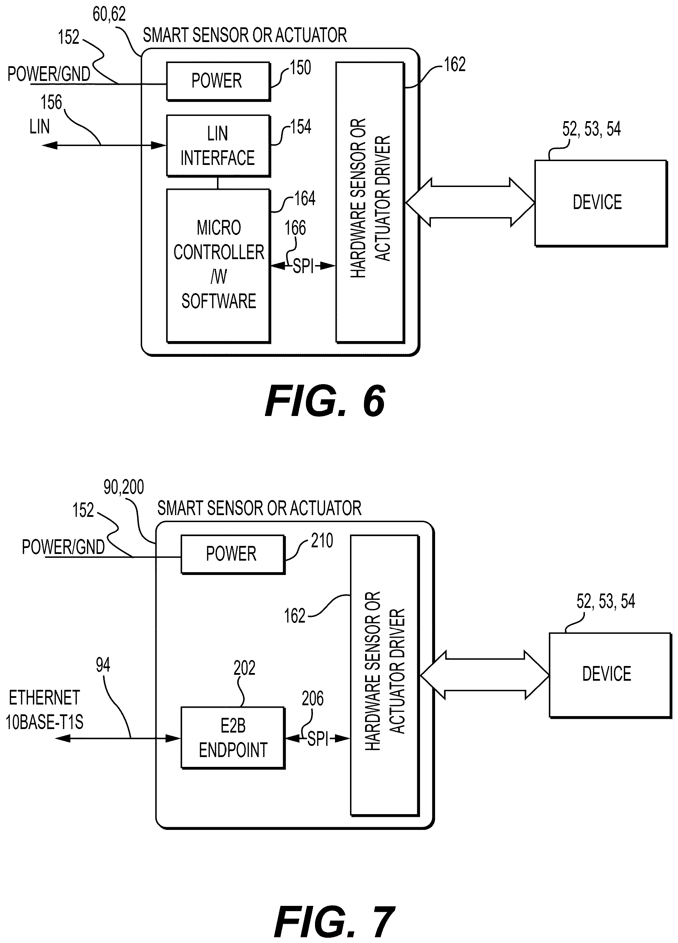

Recently, technology called Ethernet-to-Edge Bus (E2B) has emerged that implements a fixed messaging protocol on to Ethernet packets that supports signals for most common peripheral actions like the above mentioned. This means that the need for a dedicated micro controller and software for each device to translate the command-and-control messages can now be replaced with this new technology, effectively supporting a Remote Control Protocol (RCP) over Ethernet. See, for example, FIGs. 6-7.

### Benefits

The present disclosure may provide optimization of subsystems, which may be driven by pressures of cost reduction. Removing microcontrollers and CAN/LIN transceivers eliminates these silicon components from the circuit design of the device, although they will be replaced with the E2B Endpoint component. Reduction of printed circuit board (PCB) space and power consumption by eliminating the microcontroller may also ultimately contribute to the design optimization.

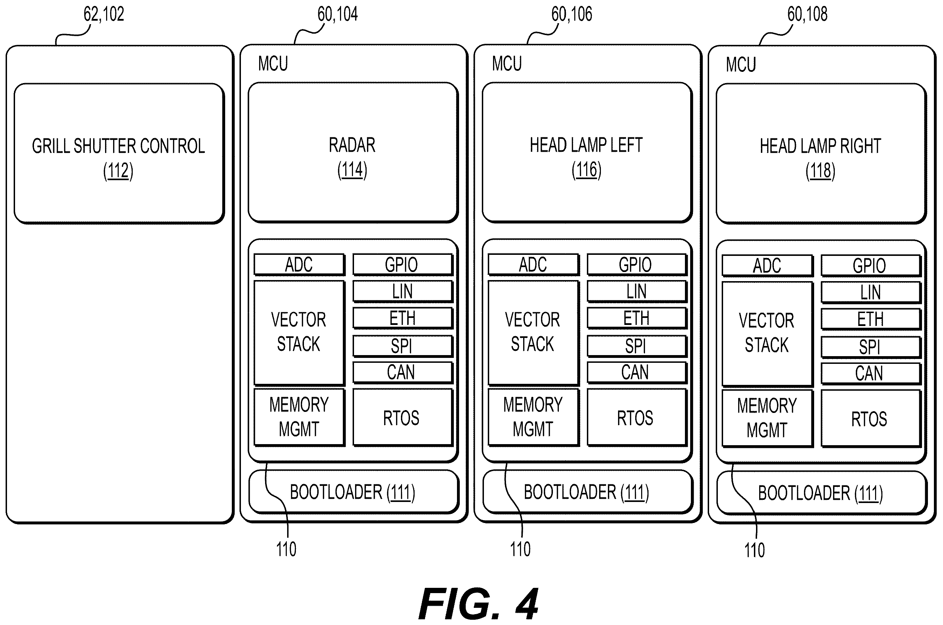

Furthermore, in the assembly of the full subsystem, where all the E/E components are interconnected with the same Ethernet interface cable, and the power for the devices is provided by one common power supply line, optimization is also achieved by the reduced complexity of the wiring harness. Most of all, by eliminating software layers like Operating System, Communication Stack, Bootloaders for each of the devices significant optimization can be achieved from removing all software from the subsystem. See, for example, FIGs. 4-5. Additionally, the system of the present disclosure may include a Package Control Algorithm as a Virtual Device Driver for a Software-Defined Vehicle.

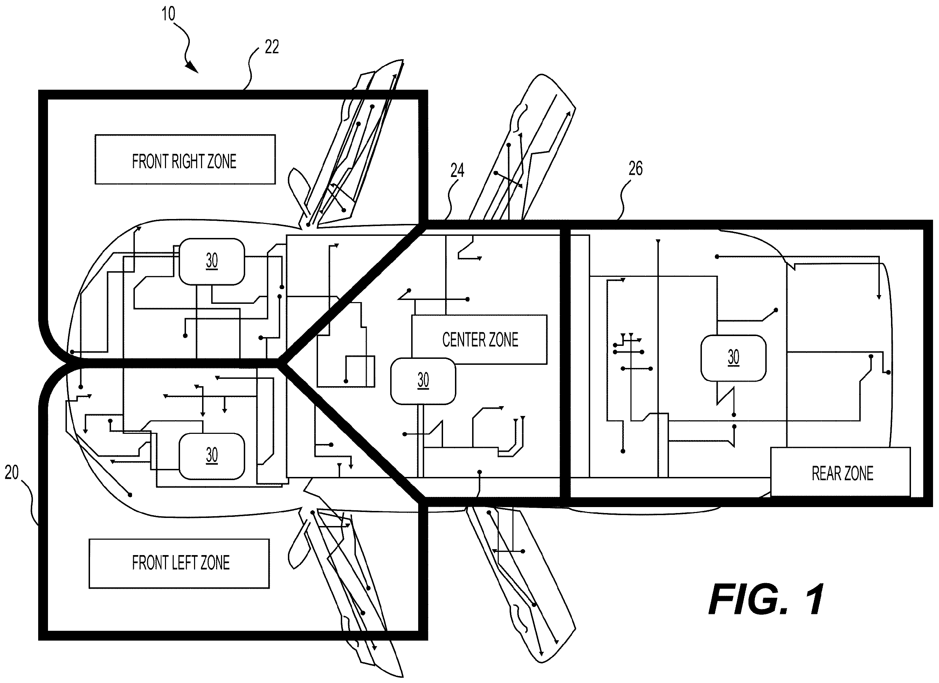

FIG. 1 shows a top view of a vehicle 10 with a schematic diagram showing various electrical devices, electrical control units (ECUs), and wiring interconnections, and with the vehicle 10 divided into four zones 20, 22, 24, 26. FIG. 1 shows an average vehicle. High-end vehicles may have more than a hundred ECUs distributed across the vehicle 10. Each of the four zones 20, 22, 24, 26 includes a zonal controller 30 that is configured to interface with input and/or output devices, such as sensors and actuators, in the corresponding zone 20, 22, 24, 26.

### Example Subsystem

To illustrate the concept of a softwareless subsystem, the present disclosure provides a front subsystem assembly of a vehicle, which may be called a fascia.

The fascia of a modern automotive vehicle contains numerous electronic components, such as headlamps, cameras, long range radars, grill shutters, fog lights, direction lights, ultra-sonic sensors, blind-zone detection radars, horn, etc.

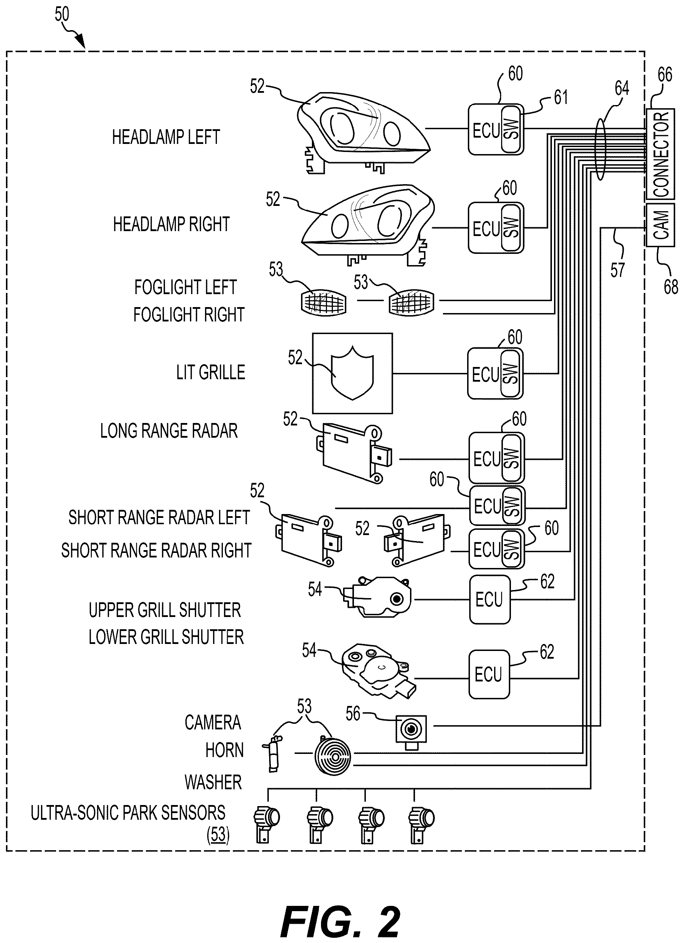

FIG. 2 shows a block diagram of a first fascia assembly **50** for a vehicle, with a conventional electrical and electronics (E/E) configuration. The first fascia assembly **50** includes several complex devices **52,** such as headlamp assemblies and radar sensors, and which may be relatively computationally intensive to operate. Accordingly, each of the high-complexity devices **52** is connected directly to a dedicated first electronic control unit (ECU) **60,** with onboard software **61** to manage operation of the corresponding high-complexity device **52.** Each of the high-complexity devices **52** may include several different output devices, such as lighting arrays or radar transmitters. Additionally or alternatively, each of the high-complexity devices **52** may include several different input devices, such as sensors or radar receivers.

The first fascia assembly **50** also includes several medium-complexity devices **54,** such as grill shutters. The medium-complexity devices **54** may include an actuator coupled to one or more sensors, such as end-of-travel limit switches, and/or current sensors. Each of the medium-complexity devices **54** is connected directly to a dedicated second ECU **62** to manage operation of the corresponding medium-complexity device **54.** The second ECUs **62** may not include software and may, instead, include application-specific hardware to control operation of the corresponding medium-complexity device **54.**

The first fascia assembly **50** also includes several low-complexity devices **53,** such as fog lights, a horn, a washer fluid pump, and ultrasonic parking sensors. Each of the low-complexity devices **53** may perform a corresponding function upon application of power thereto. Some of the low-complexity devices **53,** such as the ultrasonic parking sensors, may generate a control signal indicative of a sensed object.

The first fascia assembly **50** also includes a camera **56** that generates an image signal and which is transmitted to a receiving device, such as an ADAS controller, via a video interface **57,** such as an HDMI or other electrical interface that is configured to transmit one or more analog and/or digital video signals.

As shown in FIG. 2, each of the ECUs **60, 62,** and each of the low-complexity devices **53** has power and signal interface wiring **64** that is collected and interfaced outside of the first fascia assembly **50** at a first connector **66.** The first connector **66** may include a large multipin wiring plug/receptacle to transmit power and communication signals. As also shown, the video interface **57** connects to outside of the first fascia assembly **50** at a camera interface connector **68** that is separate and independent of the first connector **66.**

Each of the ECUs **60, 62** may be relatively small devices, including a small circuit board that is attached to or in close proximity to a corresponding sensor or actuator device. In some cases, the ECUs **60, 62** may include a dedicated circuit board in a separate enclosure attached to the device corresponding device **52, 54.**

Some devices may include a dedicated device controller chip that is already supported with a LIN or CAN interface, such as a stepper-motor driver or a blind-zone radar. These devices may not require custom software or a microcontroller and can be directly connected to an E2B endpoint interface.

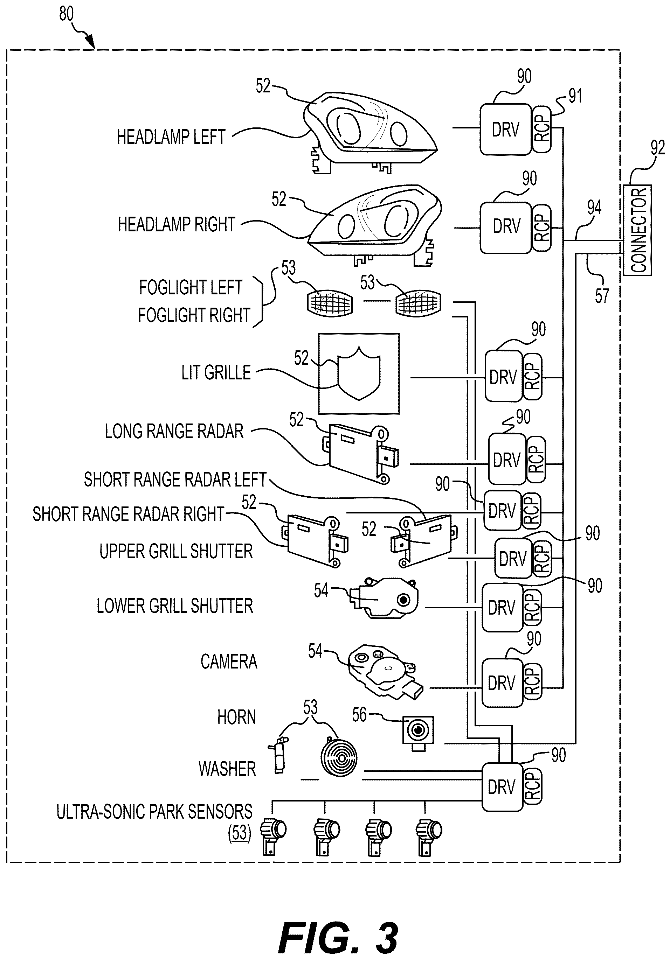

FIG. 3 shows a block diagram of a second fascia assembly **80** for a vehicle, and with a softwareless E/E configuration, in accordance with an aspect of the present disclosure. The second fascia assembly **80** includes the same devices **52, 54, 53** as the first fascia assembly **50.** However, the second fascia assembly **80** includes a plurality of remote control interfaces **90** in place of the ECUs **60, 62.** The remote control interfaces **90** may also be called an Edge Bus interface. As shown, each of the remote control interfaces **90** implements a Remote Control Protocol (RCP) **91** for communication and/or power over an Ethernet bus **94.** The second fascia assembly **80** includes a second connector **92** that may provide removable attachment of the second fascia assembly **80** from control and power infrastructure of the vehicle. The second connector **92** includes connections for the Ethernet bus **94.** Additionally or alternatively, the second connector **92** may include connections for the video interface **57.**

### Eliminating Software and Remote Control

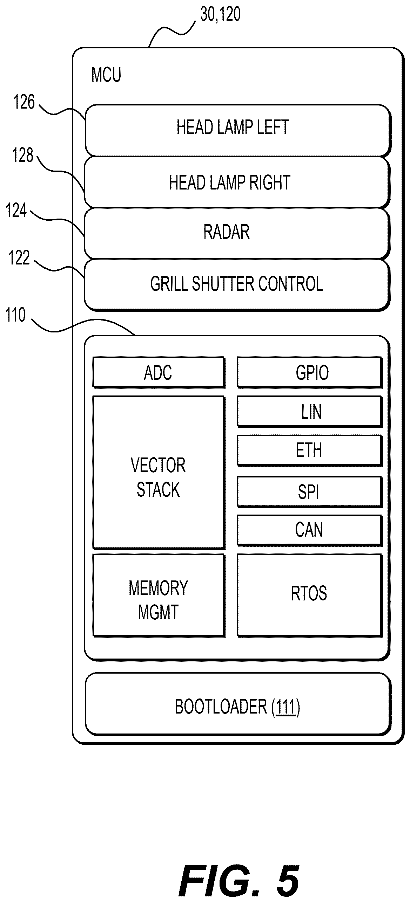

FIG. 4 shows a block diagram of a control software stack of several microcontrollers **102, 104, 106, 108** in the first fascia assembly of FIG. 2, and FIG. 5 shows a block diagram of a control software stack of a processor **120** configured to control components in the second fascia assembly of FIG. 3. The control software stack of FIG. 5 may be implemented, for example, by one of the zonal controllers **30.**

As can be seen in FIG. 4, each of the first ECUs **60** and the second ECUs **62** includes a corresponding one of the microcontrollers **102, 104, 106, 108,** and each of the microcontrollers **102, 104, 106, 108** includes a base software stack **110,** such as a real-time operating system (RTOS), and drivers for a variety of hardware interfaces, such as an analog/digital converter (ADC), a vector stack, memory management, general-purpose input/output (GPIO), local interconnect network (LIN), Ethernet (ETH), controller area network (CAN). Each of the microcontrollers **102, 104, 106, 108** also includes a bootloader **111** and a hardware interface driver **112, 114, 116, 118** for controlling interactions with a corresponding electronic component. Specifically, a first microcontroller **102** of the microcontrollers **102, 104, 106, 108** includes a grill shutter control driver **112** for controlling and monitoring operation of one or more of the grill shutters. A second microcontroller **104** of the microcontrollers **102, 104, 106, 108** includes a RADAR driver **114** for controlling and monitoring operation of a long-range radar device or a short-range radar device. A third microcontroller **106** of the microcontrollers **102, 104, 106, 108** includes a left headlamp driver **116** for controlling and monitoring operation of a leftside headlamp assembly. A fourth microcontroller **108** of the microcontrollers **102, 104, 106, 108** includes a right headlamp driver **118** for controlling and monitoring operation of a right-side headlamp assembly.

As can be seen in FIGs. 5, the individual software stacks are eliminated, and the control of the devices is implemented in a shared ECU, such as one of the zonal controllers **30,** remote from the subsystem. Each device will have a representative device driver **122 124, 126, 128,** that implements the specific communication with the peripheral functions to operate the hardware of the device, to implement the required functions. Each of the device drivers **122 124, 126, 128** may implement similar or identical functionality to a corresponding one of the hardware interface drivers **112, 114, 116, 118.** The base software stack **110,** including the operating system and the communication stack, and the bootloader **111** can be shared with the rest of the software on the processor **120.**

The device-specific control software that was originally on the microcontroller with the device, and which has now been moved to the shared ECU may consist of multiple layers.
1) Peripheral configuration, calibration, diagnostics
2) Basic functions and commands
3) Low-level control algorithms for motion control of signal conditioning
4) Application functions that implement feature-specific behavior.

As a rule-of-thumb, application functions that implement feature-specific behavior in 4) may not be part of the virtual device driver. Instead, they implemented separately on top of the control logic software in 1), 2) and 3). These first 3 layers will expose an Application Programming Interface (API) to the shared ECU environment, when the application software can command the devices to execute specific functions with a single command.

### Reducing Harness

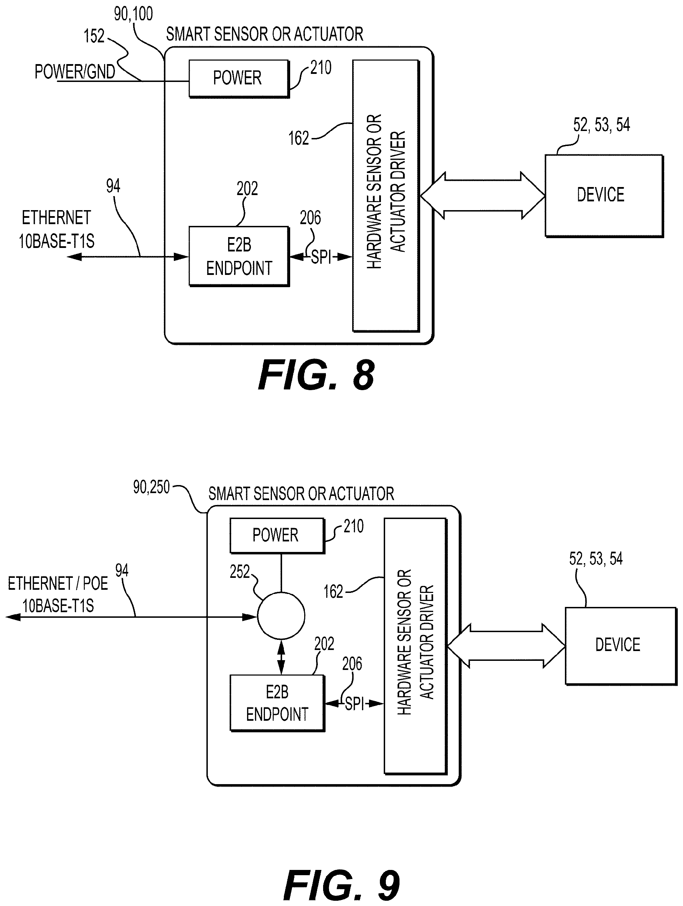

Further optimization of the softwareless subsystem can be achieved by combining power and communication over the same wires. This is called Power over Bus, or Power over Line. See, for example, FIGs. 8-9. Device power and communication wires (shown on FIG. 8) can be combined using Power-via-Bus to reduce harness complexity, as shown on FIG. 9.

The softwareless subsystem may be part of a larger integrated system. As part of the wire harness optimization for the larger system, the present disclosure also includes implementation of e-Fuses by each of the devices in the softwareless subsystem. See, for example, FIGs. 10-11. One or more electronic fuses, which may be called e-Fuses or eFuses, may be used to reduce or eliminate needs to route power supply for individual devices to a central fuse box in the larger system for serviceability. If e-Fuses are installed on the devices in the subsystem, they can be configured and controlled with the same E2B interface, without the need for a microcontroller or software, thereby maintaining the concept of the softwareless subsystem while further optimizing the system's wiring harness.

A conventional fuse may provide a thermal cutting function that breaks a conductive path in response to a current above a predetermined value. In some cases, a conventional fuse may include a time delay to allow for a combination of overcurrent for a period of time before the conductive path is broken. A conventional fuse may need to be replaced after breaking in order to restore the conductive path. An e-Fuse may provide similar or identical functionality to a conventional fuse, such as causing an open circuit in response to an overcurrent condition and/or in response to a current above a predetermined amount for a predetermined period of time. An e-Fuse may be reset via software and does not need to be serviceable.

### Additional Functionality

The following features may be included in the softwareless subsystem:
- The subsystem may be designed for compliance with safety regulations (functional Safety);
- The Ethernet communication interface may support security features such as encryption, authentication and others;
- The devices may support a feature that uniquely identifies the hardware, without an ability to remanufacture or reverse engineer. This will ensure that the control software that now resides on the main system remotely from the softwareless subsystem, cannot be used to control a copy or replica of the subsystem; and
- The devices may be configured to provide self-diagnostics and health monitoring. These functions may be installed as hardware peripherals of the devices, and remotely controlled by E2B, and supported with the virtual device driver in the remote control software; and
- Device configuration may also be supported by the E2B interface.

FIG. 6 shows a block diagram of an ECU **60, 62** for a smart sensor or actuator in the first component assembly of FIG. 2. The ECU **60, 62** includes a first power converter 150 that is connected to a power supply wire **152** for receiving electrical power therefrom. The first power converter **150** may produce power at one or more different voltages as required for various loads. The first power converter **150** may perform other functions, such as voltage stabilization or filtering. The ECU **60, 62** also includes a Local Interconnect Network (LIN) interface **154** that is configured to communicate with external controllers via a LIN bus interconnection bus **156.** The ECU **60, 62** also includes a hardware sensor or actuator driver **162** that is electrically connected to one or more electronic components, such as one or more of the devices **52, 53, 54** shown in FIGs. 2-3. The hardware sensor or actuator driver **162** may include input hardware for monitoring sensed signals from input devices of the electronic components. Additionally or alternatively, the hardware sensor or actuator driver **162** may include output hardware for sending command and/or power signals for operating output devices of the electronic components.

The ECU **60, 62** also includes a microcontroller **164** with software and which is in functional communication with the (LIN) interface **154** and with the hardware sensor or actuator driver **162.** The microcontroller **164** is shown as connected to the hardware sensor or actuator driver **162** via a first serial peripheral interface (SPI) bus **166.** However, another type of interconnection may be used for transferring data therebetween.

FIG. 7 shows a block diagram of a first edge bus interface **200** for a smart sensor or actuator, and which may be used as one of the remote control interfaces **90** in the second fascia assembly **80** of FIG. 3. The first edge bus interface **200** includes a second power converter **210** that is connected to a power supply wire **152** for receiving electrical power therefrom. The second power converter **210** may be similar or identical to the first power converter **150** of the ECUs **60, 62.** However, the second power converter **210** may be simplified since it may not need to deliver power meeting particular requirements of a microcontroller. The first edge bus interface **200** also includes a hardware sensor or actuator driver **162,** which may be similar or identical to the hardware sensor or actuator driver **162** of the ECU **60, 62.** The

The first edge bus interface **200** also includes an Ethernet to Edge Bus (E2B) endpoint device **202** that connects to the Ethernet bus **94** and to the hardware sensor or actuator driver **162** via a second SPI bus **206.** The E2B endpoint device **202** may be configured to translate messages between the Ethernet bus **94** and the second SPI bus **206** for controlling and/or monitoring one or more electronic components that are connected to the hardware sensor or actuator driver **162.** The first edge bus interface **200,** including the E2B endpoint device **202,** may be a softwareless device, having no rewritable storage memory containing software instructions. For example, the E2B endpoint device **202** may have no storage memory that is capable of being written. In some embodiments, the E2B endpoint device **202** may be a purely hardware device, with its functionality hard-coded and unchangeable. In some embodiments, the E2B endpoint device **202** may include a storage memory containing instructions for its operation. However, the storage memory may be configured as a read-only memory that is not capable of being re-written after the device is manufactured and placed into an operational configuration.

FIG. 8 shows a block diagram of the first edge bus interface **200** of FIG. 7, with separate power and communications wires. FIG. 9 shows a block diagram of a second edge bus interface **250,** with a power-via-bus configuration. The second edge bus interface **250** may be similar or identical to the first edge bus interface **200** except with the addition of a power splitter **252** that is configured to extract electrical power from the Ethernet bus **94,** and to provide input power to the second power converter **210.** Thus, the second edge bus interface **250** may not include any power supply wire **152** connection and may, instead, use the Ethernet bus **94** for both data and power interfaces.

The present disclosure provides a softwareless assembly. The softwareless assembly comprises: a plurality of electronic components including one or more input devices and one or more output devices; a shared communications interface configured to communicate status data from the one or more input devices to an external consumer located outside of the softwareless assembly, and to communicate control signals to the one or more output devices from an external command source located outside of the softwareless assembly. The softwareless assembly also comprises a plurality of remote control interfaces each operably connected to one or more of the electronic components. The plurality of remote control interfaces are configured to transmit at least one of: the status data and the control signals between the shared communications interface and the one or more electronic components operably connected thereto. The plurality of remote control interfaces are each softwareless devices having no rewritable storage memory containing software instructions.

In some embodiments, the shared communications interface includes an Ethernet bus. However, a different communications bus, such as a controller area network (CAN) bus may be used.

In some embodiments, at least one of the external consumer and the external command source is configured to communicate with the plurality of remote control interfaces using Remote Control Protocol (RCP) over the Ethernet bus.

In some embodiments, at least one of the remote control interfaces is configured to receive power substantially entirely via the shared communications interface. For example, one or more of the remote control interfaces may include the second edge bus interface **250** shown in FIG. 9.

In some embodiments, at least one of the external consumer and the external command source includes a device driver for at least one of: the one or more input devices and the one or more output devices. For example, the external consumer and the external command source may each be implemented by a zonal controller **30,** which may include device drivers, such as the device drivers **122, 124, 126, 128** shown on FIG. 5.

In some embodiments, at least one of the remote control interfaces includes an electronic fuse (e-Fuse) configured to limit electrical current supplied to a corresponding electrical component of the plurality of electronic components, and the remote control interface may be configured to selectively reset the electronic fuse based on a message received via the shared communications interface. For example, the edge bus interfaces **200, 250** may include the e-Fuse shown and described with reference to FIG. 11.

The present disclosure also provides an assembly for a vehicle including the softwareless assembly described herein. For example, the assembly for a vehicle may include the second fascia assembly **80.** However, the principles of the present disclosure may be applied to other vehicle assemblies, such as a door assembly or an integrated powertrain module.

In some embodiments, at least one of the remote control interfaces includes a peripheral interface for communicating with a corresponding electrical component of the plurality of electronic components, the peripheral interface includes at least one of: a serial peripheral interface (SPI), an inter-integrated circuit (I2C) interface, or a universal asynchronous receiver/transmitter (UART), and the at least one of the remote control interfaces is configured to translate messages between the shared communications interface and the peripheral interface.

The present disclosure also provides a control system for a softwareless assembly. The control system comprises: a shared communications interface; a shared electronic control unit (ECU) operably connected to the shared communications interface; and a plurality of remote control interfaces. Each of the remote control interfaces is operably connected between the shared communications interface and one or more electronic components. Each remote control interface is configured to transmit at least one of: status data messages or control signals between the shared communications interface and the one or more electronic components operably connected thereto. The plurality of remote control interfaces are each softwareless devices having no rewritable storage memory containing software instructions.

The present disclosure also provides an assembly for a vehicle including the control system described herein. For example, the assembly for a vehicle may include the second fascia assembly **80.** However, the principles of the present disclosure may be applied to other vehicle assemblies, such as a door assembly or an integrated powertrain module.

The system, methods and/or processes described above, and steps thereof, may be realized in hardware, software or any combination of hardware and software suitable for a particular application. The hardware may include a general purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or alternatively, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine readable medium.

The computer executable code may be created using a structured programming language such as C, an object oriented programming language such as C++, or any other highlevel or low-level programming language (including assembly languages, hardware description languages, and database programming languages and technologies) that may be stored, compiled or interpreted to run on one of the above devices as well as heterogeneous combinations of processors processor architectures, or combinations of different hardware and software, or any other machine capable of executing program instructions.

Thus, in one aspect, each method described above and combinations thereof may be embodied in computer executable code that, when executing on one or more computing devices performs the steps thereof. In another aspect, the methods may be embodied in systems that perform the steps thereof, and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

The foregoing description is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A softwareless assembly, comprising:
a plurality of electronic components including one or more input devices (52, 53, 54) and one or more output devices (52, 53, 54);
a shared communications interface configured to communicate status data from the one or more input devices (52, 53, 54) to an external consumer located outside of the softwareless assembly, and to communicate control signals to the one or more output devices (52, 53, 54) from an external command source located outside of the softwareless assembly; and
a plurality of remote control interfaces (90) each operably connected to one or more electronic components of the plurality of electronic components, wherein each remote control interface of the plurality of remote control interfaces (90) is configured to transmit, between the shared communications interface and the one or more electronic components operably connected thereto, at least one of: the status data and/or the control signals, and
wherein the plurality of remote control interfaces (90) are each softwareless devices (52, 53, 54) having no rewritable storage memory containing software instructions.

2. The softwareless assembly of Claim 1, wherein the shared communications interface includes an Ethernet bus (94).

3. The softwareless assembly of any of the preceding claims, wherein at least one of the external consumer and the external command source is configured to communicate with the plurality of remote control interfaces (90) using Remote Control Protocol (RCP) over the Ethernet bus (94).

4. The softwareless assembly of any of the preceding claims, wherein at least one of remote control interface of the plurality of remote control interfaces (90) is configured to receive power substantially entirely via the shared communications interface.

5. The softwareless assembly of any of the preceding claims, wherein at least one of the external consumer and the external command source includes a device driver for at least one of: the one or more input devices (52, 53, 54) and the one or more output devices (52, 53, 54).

6. The softwareless assembly of any of the preceding claims, wherein at least one of the remote control interfaces (90) includes an electronic fuse (e-Fuse) configured to limit electrical current supplied to a corresponding electrical component of the plurality of electronic components, and
wherein the at least one of the remote control interfaces (90) is configured to selectively reset the electronic fuse based on a message received via the shared communications interface.

7. The softwareless assembly of any of the preceding claims, wherein at least one of the remote control interfaces (90) includes a peripheral interface for communicating with a corresponding electrical component of the plurality of electronic components,
wherein the peripheral interface includes at least one of: a serial peripheral interface (SPI), an inter-integrated circuit (I2C) interface, or a universal asynchronous receiver/transmitter (UART), and
wherein the at least one of the remote control interfaces (90) is configured to translate messages between the shared communications interface and the peripheral interface.

8. An assembly for a vehicle (10) including the softwareless assembly of any of the preceding claims.

9. A control system for a softwareless assembly, comprising:
a shared communications interface;
a shared electronic control unit (30) operably connected to the shared communications interface; and
a plurality of remote control interfaces (90) each operably connected between the shared communications interface and one or more electronic components, wherein each remote control interface of the plurality of remote control interfaces (90) is configured to transmit, between the shared communications interface and the one or more electronic components operably connected thereto, at least one of: status data from one or more input devices (52, 53, 54) and/or control signals to one or more output devices (52, 53, 54), and
wherein the plurality of remote control interfaces (90) are each softwareless devices (52, 53, 54) having no rewritable storage memory containing software instructions.

10. The control system of Claim 9, wherein the shared communications interface includes an Ethernet bus (94).

11. The control system of any of claims 9-10, wherein the shared electronic control unit (30) is configured to communicate with the plurality of remote control interfaces (90) using Remote Control Protocol (RCP) over the Ethernet bus (94).

12. The control system of any of claims 9-11, wherein at least one of remote control interface of the plurality of remote control interfaces (90) is configured to receive power substantially entirely via the shared communications interface.

13. The control system of any of claims 9-12, wherein the shared electronic control unit (30) includes a device driver for at least one of the one or more electronic components.

14. The control system of any of claims 9-13, wherein at least one of the remote control interfaces (90) includes an electronic fuse (e-Fuse) configured to limit electrical current supplied to the one or more electronic components, and
wherein the at least one of the remote control interfaces (90) is configured to selectively reset the electronic fuse based on a message received via the shared communications interface.

15. An assembly for a vehicle (10) including control system of any of claims 9-14.
